# EUROPEAN PATENT SPECIFICATION

(11) **EP 1 616 379 B1**
(45) Date of publication and mention of the grant of the patent: **02.08.2006**
(21) Application number: 04732631.9
(22) Date of filing: 13.05.2004
(51) Int. Cl.: H02H 3/253

(54) **PHASE FAILURE DETECTOR AND A DEVICE COMPRISING THE SAME**
PHASENAUSWAHLDETEKTOR UND EINRICHTUNG DAMIT
DETECTEUR DE DEFAILLANCE DE PHASE ET DISPOSITIF LE RENFERMANT

(30) Priority: 15.05.2003 FI 20030732
(43) Date of publication of application: 18.01.2006
(73) Proprietor: ABB Oy, 00380 Helsinki (FI)
(72) Inventor: MIETTINEN, Erkki, FI-00170 HELSINKI (FI)
(74) Representative: Tiilikainen, Jarkko Tapio
(86) International application number: PCT/FI2004/000289
(87) International publication number: WO 2004/102763

(56) References cited:
- US-A- 3 001 100
- US-A- 3 999 087
- US-A- 4 027 204

## Description

The present invention relates to a phase failure detector, according to the preamble of Claim 1, and a device including a phase failure detector.

Phase failure detectors of this kind are used in multi-phase voltage-supply networks, to detect a loss of, or reduction in voltage in one or several phases.

A phase failure detector is a particularly important component in many assemblies utilizing a mains power supply. In many assemblies, the loss of, or a significant reduction in even one phase will cause problems. Problems can be caused, for example, by the power supply or system being fed becoming loaded unevenly when one phase is missing entirely, or is significantly reduced. The asymmetry created can also cause make control of the system difficult, or cause other disturbances. Problems can also arise during the stage when the phase voltage is restored to normal.

Examples of systems requiring phase failure detectors include power supplies for three-phase motors, transformers, rectifiers, and network inverters. Particularly in rectifier solutions, in which a semi-controlled thyristor bridge is used, it is important that even short network breaks can be detected, to ensure that control of the bridge does not continue in diode mode once mains voltage has been restored. In such solutions, this is because intermediate circuit voltage can crash during an outage, resulting in fuses blowing when the power supply voltage is restored, leading to a break in the operation of a process.

Phase failure detectors can thus be used in many different industrial applications, in ships, and in a national power supply network.

Patent US 3 001 100 discloses one solution for monitoring the operation of a multi-phase network. The solution requires an auxiliary voltage source (8; 26) at the potential of the network voltage and cannot be used to determine which of the phases are defective. The solution is also slow to operate, making it unsuitable for use with modem frequency converters, for example. The slowness of the solution is due to half-wave direction (4; 22) and the time constants. The circuit disclosed also does not differentiate between a normal loss of voltage in all phases and a lack of one or two phases. The circuit will also not operate in a floating network lacking a neutral conductor.

Patent US 4 027 204 discloses a second solution for monitoring the operation of a multi-phase network. This solution can indeed operate without a separate auxiliary voltage source at the potential of the network, but the necessary auxiliary power is taken through resistances (31, 32, 33, and 37), leading to a significant power loss in normal operation, particularly if it is desired to cover a large voltage range. Due to the heavy power consumption, the solution cannot be sensibly implemented, for example, integrated in a circuit board. The rectifying diodes (12) in the circuit must also be able to withstand the voltage peaks occurring in the network voltage, thus requiring components with a very high reverse voltage capacity when using higher voltages. Another basic problem with the circuit is that it cannot be used to detect which of the phases have been lost. The circuit also does not distinguish between a normal voltage break in which all phases are lost and one in which one or two phases are lacking.

Application publication SU 1 332 448 discloses a third solution for monitoring the operation of a multi-phase network. This solution is based on electromechanical auxiliary relays (3, 4, 5, 17, and 20), the coils of which are powered through voltage divider capacitors (1). At normal network frequencies, operation requires quite large capacitance values, making the integration of the solution in a circuit board neither sensible nor even possible. The circuit also does not detect a missing phase, or a normal voltage outage in all phases. In addition, the solution operates so slowly that it is unsuitable for use, for example, in connection with modem frequency converters. The slowness is due to the electromechanical components. In addition the solution is expensive and demands a large amount of space.

Patent US 3 999 087 discloses a phase failure detector according to the preamble of claim 1.

Object of the invention is to create a simple and inexpensive phase failure detector, which will not only detect a fault state, but also which of the phases is defective.

The phase failure detector according to the invention is characterized by what is stated in the characterizing portion of Claim 1.

Such a phase failure detector is equipped with a separate detector circuit for each phase being monitored. The detector circuits are connected between the phase being monitored and a common connection point, so that the common connection point forms a reference level. This reference level can be floating, in which case it corresponds to a virtual star point of the power supply network. The reference level can also be connected to a real star point, a ground potential, or some other suitable potential, The detector circuit itself includes voltage-divider elements, and a trigger circuit and detector, to which the voltage being monitored is fed in a reduced form from the voltage-divider elements.

The device, according to the invention, utilizing a multi-phase mains power supply is, in turn characterized by what is stated in the characterizing portion of Claim 8.

Considerable advantages are gained with the aid of the invention.

With the aid of the invention, it is possible to implement a simple and inexpensive phase failure detector, which can detect not only a fault state, but also which of the phases is defective.

The invention also has numerous embodiments, by means of which significant additional advantages are gained.

In an embodiment, in which the detector circuits are connected to a common reference point with a known potential, the phase failure detector can also detect a fault state, in which all phases are defective.

The invention permits the phase failure detector to be designed with an extremely simple construction. In such a simple embodiment, only a few discrete components are required for the phase failure detector and the manufacturing costs remain very small. The phase failure detector can also be integrated on a circuit board and manufactured with a very small physical size.

The invention also permits a circuit solution that can be applied to a wide mains-voltage range. A circuit solution according to some embodiments can be applied, as such, to the entire low-voltage range, and, with the aid of voltage transformers, also to medium and high voltages.

An additional advantage is also achieved using embodiments, in which the capacitor or capacitors of the voltage divider elements are used as an energy store and the power for the trigger circuit and detector is supplied from this energy store. In such embodiments, the trigger circuit and the detector do not need an auxiliary power supply or a separate energy supply; instead the necessary energy is obtained directly from the electricity network being monitored.

The invention also permits galvanic separation from the systems separating fault information.

One interesting application of the invention is a power inverter used in a motor power feed. The phase failure detector can then be incorporated in the equipment assembly and set to monitor the alternating voltage being fed to the rectifier. If the common connecting point of the detector circuits of the phase failure detector is connected to the reference potential leading from the direct-voltage circuit of the rectifier, for example, to the medium voltage of the direct-voltage circuit (the potential level in the middle of the minus and plus potentials), the phase failure detector will be able to detect each defective phase, independently of the operation of the other phases.

In the following, the invention is examined with the aid of examples and with reference to the accompanying drawings.

Figure 1 shows one phase failure detector according to the invention, connected to a three-phase voltage supply.

Figure 2 shows a diagram of the detector circuit of the phase failure detector of Figure 1.

Figure 3 shows a voltage-vector presentation of an functioning three-phase system.

Figure 4 shows a voltage-vector presentation of a three-phase system, in which the voltage of one phase has been lost.

Figure 5 shows a circuit diagram of one phase failure detector according to the invention.

The following example describes the use of the invention in three-phase systems, which are the simplest of the systems that can be used as examples. However, the corresponding principles can also be used in other multi-phase systems and particularly in systems in which the phases are multiples of three (n x 3-phase system).

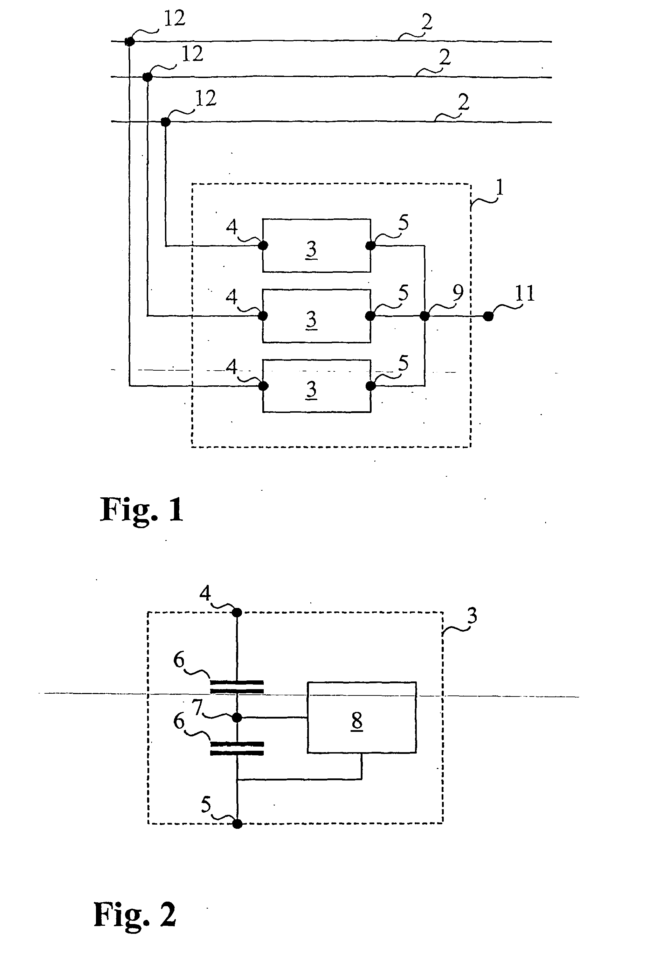

Figure 1 shows a phase failure detector 1 for a three-phase electricity supply network. The phase failure detector 1 includes a separate detector circuit 3, which has a first connection point 4 and a second connection point 5, for each phase 2 of the electricity supply network. The first connection point 4 of each detector circuit 3 is connected electrically to the connection point 12 of the phase 2 monitored by the detector circuit 3. The second connection points 5 of the detector circuits 3 are, in turn, connected to a common connection point 9 of the detector circuits, which corresponds to a star point of the electricity supply network being monitored. The connection point 9 can therefore be termed a virtual start point. In the circuit of Figure 1, the connection point 9 is floating, so that it is not connected to a real start point of the electricity supply network - which is why it is called a virtual star point. The phase failure detector of Figure 1 can, of course, also be connected to an external ground point, a star point, or corresponding reference level, with the aid of a connector 11 connected to the connection point 9.

Figure 2 shows the detector circuit 3 used in the phase failure detector of Figure 1 in greater detail. The detector circuit 3 of Figure 2 includes capacitive voltage divider elements 6, which are connected between the first connection point 4 and the second connection point 5. Thus, the voltage divider elements 6 divide the voltage (phase voltage) between the phase 2 and the virtual star point 9, as reduced voltage. The voltage divider elements 6 are typically made from capacitors, as capacitors have certain advantageous properties. For example, capacitors have low power consumption. In addition, capacitors act as an energy store, which offers excellent possibilities for the operation of the detector circuit 3. Connected to the voltage divider elements 6 is an input point 7, to which the divided voltage is led, and through which the energy stored in the voltage divider elements 6 can be discharged. The detector circuit 3 also includes a trigger and detector circuit 8, which is connected between the input point 7 and the second connection point 5.

The trigger and detector circuit S is a circuit, which produces a detection pulse, when the voltage in the input point 7 reaches a trigger level. A suitable triac or thyristor circuit, for example, can be utilized in the trigger circuit. The trigger is designed to activate, for example, always when the absolute value of the voltage of the input point 7 (which thus follows the phase voltage) rises to a specific trigger level. Thus, during one cycle of alternating voltage, the trigger and detector circuit 8 produce two detection pulses, if the phase 2 being monitored functions normally. The detection pulse can be transmitted onwards from the circuit 8 to monitoring equipment (not shown) that detects a fault state, if the detection pulses are not received within a predefined time. In principle, this reaction time can be even less that the cycle of the alternating voltage, but in most applications an alarm or fault notification is only worth making after a longer period without pulses, for example, 1 - 5 seconds. In a preferred embodiment, the trigger and detector circuit 8 takes its energy from the energy store contained in the voltage divider element 6. Such an embodiment is very simple and, in addition, the use of it achieves the considerable advantage that a fault state is also detected if the circuit 3 itself becomes defective. Thus, in a fault state of the phase failure detector 1, it is not possible to draw the erroneous conclusion that there is no defect in the voltage supply.

The link between the trigger and detector circuit 8 and the monitoring equipment can be designed to be galvanically isolated. Thus, the detection pulse can be transmitted, for example, with the aid of a pulse of light or sound.

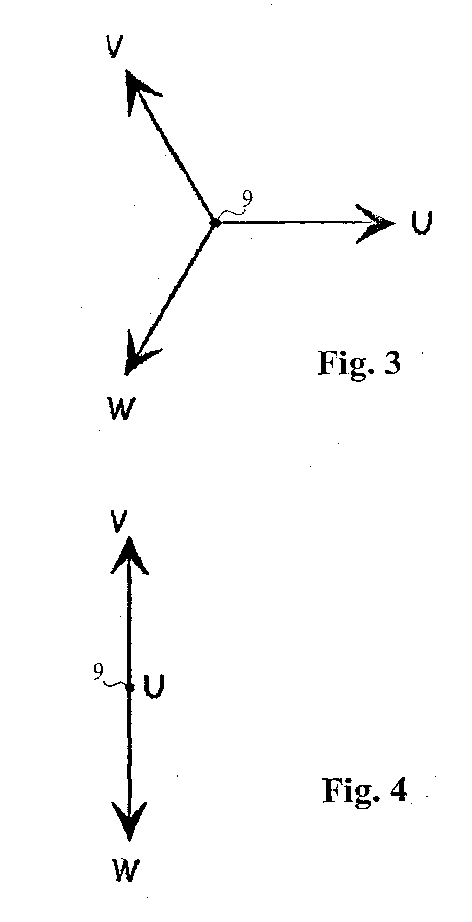

The following describes the operation of the phase failure detector 1 in a phase fault situation, with the aid of the vector presentations of Figures 3 and 4. The voltages of a three-phase system can be shown using three phase-voltage vectors. Figure 3 shows such a presentation. If the voltage supply network is symmetrical, the absolute values of the voltage vectors, relative to the star point 9, are of the same magnitude and at an angle of 120 degrees to each other.

If, however, one of the phase inputs fails (for example, phase U), the voltage-vector presentation takes the form shown in Figure 4. The voltage vectors of the two remaining phases 2 are still mutually of the same magnitude, but there is a phase transfer of 180 degrees between them, i.e. they are in opposite directions. The apparent star point 9 has moved to the middle of the straight line between the points of the vectors.

If phase U has failed, the length of the sector corresponding to the voltage of phase U is zero and the entire sector is still located in the aforementioned apparent star point 9, because, in the phase failure detector 1, the voltage divider 6 of the phase 2 in question is connected to the common star point 9. Thus, no voltage of any kind acts over the voltage divider 6 of the defective phase. The trigger and detector circuit 8 of phase U therefore does not give a detection pulse.

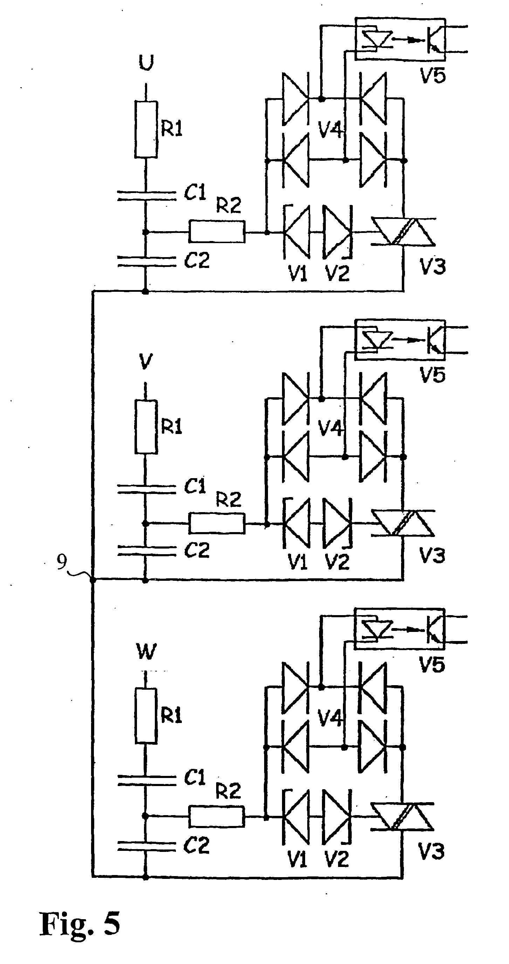

Figure 5 shows one extremely simple circuit, by means of which the phase failure detector shown in Figures 1 and 2 can be implemented. In the circuit shown in Figure 5, each of the phases U, V, and W being monitored is connected against the virtual star point 9 by the voltage divider (voltage divider elements 6) formed by the resistance R1 and the capacitors C1 and C2. A voltage acts over the capacitor C2, its magnitude depending on the component values, the phase voltage, and the network frequency.

The voltage acting over the capacitor C2 is led, through the resistance R2 and the Zener diodes V1 and V2, to the gate of the triac V3 (trigger and detector circuit 8). If the voltage exceeds the Zener voltage, a gate current begins to flow to the triac, in which case it is triggered to a conducting state. The capacitor C2 now discharges through the resistance R2, the bridge V4, the LED of the opto-link V5, and the triac V3, thus creating a current pulse. The amplitude and duration of the pulse will depend on the values of the resistance R2 and the capacitor C2.

The energy of the capacitor C2 thus discharges through the LED of the opto-link, so that the light of the LED puts the receiver of the opto-link momentarily into a conducting state. This state is indicated in a suitable manner, for example, by generating an interrupt request to a micro-controller.

In the circuit of Figure 5, the task of the resistance R1 is to limit the surge current travelling through the capacitors C1 and C2 when the device is switched on and in cases in which there are rapidly rising and falling voltage peaks or notched voltage edges in the network voltage. In three-phase supply applications, the resistance R1 has a resistance value typically in the order of a kilo-ohm and should withstand a power of at least a couple of watts.

The voltage acting over the capacitor C2 can be selected freely by altering the values of the voltage-divider components C1 and C2. In practice, the effect of the resistance R1 on the division ratio of the voltage is of no significance. The level of the capacitance of the capacitors can be selected to be such that the rms current (effective current - root mean square), at the greatest network frequency used, is about 10 - 15 mA. Thus, if the available network (main) voltage is 600 volts at a frequency of 60 hertz, or 690 volts at a frequency of 50 hertz, the total capacitance of the voltage divider can be in the order of magnitude of 100 nF.

About 15 volts is typically selected as the value of the Zener diodes V1 and V2 defining the trigger value of the triac V3, in which case the value of the resistance R2 limiting the current of the LED can be, for example 470 ohms. R2 thus protects the LED from excess current and, on the other hand, slows the discharge of the capacitor C2, thus prolonging the light pulse obtained from the LED. As the trigger current of the small triac used in this connection is in the order of a few milliamperes, the peak voltages acting over the capacitor C2 need be only slightly greater than the Zener voltage, for the triac V3 to trigger.

The voltage division is used to set the trigger voltage to correspond to the network voltage level at which it is wished for detection of the missing phase to occur. Thus, if it is wished for the phase failure detector to operate in the nominal voltage range of 400 - 690 volts, a suitable detection level for a missing phase could be, for example, 280 volts. The phase voltage level seen by the phase failure detector is 160 voltsᵣₘₛ, i.e. at a peak value of about 225 volts, so that the voltage division ratio using 15-volt Zener diodes will be about 15. This is achieved with sufficient accuracy by selecting 100 nF as the value of the capacitor C1 and 1,5 µF (microfarads) as the value of the capacitor C2. The capacitor C1 should withstand the entire network voltage, whereas 25 volts, for instance, will be a sufficient voltage resistance for the capacitor C2.

At the detection level and an alternating voltage of 50 hertz, a peak current of about six milliamperes will travel through the voltage divider, which is eminently sufficient to trigger the triac.

## Claims

1. A phase failure detector (1) for a multi-phase electricity supply network, which phase failure detector includes a detector circuit (3) for each phase (2), which detector circuit (3) has a first connection point (4) for connecting to the phase (2) being monitored and a second connection point (5), which is connected to a common connection point (9) of the detector circuits, in which each detector circuit (3) includes
― voltage divider elements (6) for dividing voltage between the first (4) and the second (5) connection point and for feeding reduced voltage to an input point (7), and
― a trigger and detector circuit (8) connected between the reduced voltage input point (7) and the second connection point (5),
**characterized in that**
― the voltage divider elements (6) include at least two capacitive elements (C1, C2), which participate in the division of the voltage and of which at least one (C2) is arranged to store energy and to discharge the energy it stores through the trigger and detector circuit (8), and
― each trigger and detector circuit (8) is arranged to produce a detection pulse when the reduced voltage reaches a trigger value, whereby the phase failure detector can, in addition to detecting a fault state, also detect which of the phases is defective.

2. A phase failure detector according to Claim 1, **characterized in that** the phase failure detector includes a resistive element between the capacitive elements (C1, C2) and the first connection point (4).

3. A phase failure detector according to Claim 1 or 2, **characterized in that** the operating energy of the trigger and detector circuit (8) is taken from the voltage divider elements (6).

4. A phase failure detector according to any of Claims 1 - 3, **characterized in that** the trigger and detector circuit (8) includes a triggering circuit element (V1, V2, V3), which triggers to a conducting state when the control voltage rises to a specific triggering level.

5. A phase failure detector according to any of Claims 1 - 4, **characterized in that** the trigger and detector circuit (8) includes a rectifier (V4).

6. A phase failure detector according to any of Claims 1 - 5, **characterised in that** the trigger and detector circuit (8) includes an opto-link (V5).

7. A phase failure detector according to any of Claims 1- 6, **characterized in that** it is arranged to be used in a three-phase network, in which case the phase failure detector includes exactly three detector circuits (3).

8. A device utilizing multi-phase network input, **characterized in that** it includes a phase failure detector (1) according to any of Claims 1 - 7.

9. A device according to Claim 8, **characterized in that** it is a rectifier and that the common connection point (9) of the detector circuits of the phase failure detector (1) is connected to a reference potential taken from the direct-voltage circuit of the rectifier.

## Patentansprüche

1. Phasenausfalldetektor (1) für ein Multiphasen-Elektrizitätsversorgungsnetzwerk, welcher Phasenausfalldetektor einen Detektorschaltkreis (3) für jede Phase (2) aufweist, welcher Detektorschaltkreis (3) einen ersten Verbindungspunkt (4) zum Verbinden mit der überwachten Phase (2) und einen zweiten Verbindungspunkt (5), der mit einem gemeinsamen Verbindungspunkt (9) der Detektorschaltkreise gekoppelt ist, aufweist, in dem jeder Detektorschaltkreis (3) aufweist:
- Spannungsteilerelemente (6) zum Teilen von Spannungen zwischen dem ersten (4) und dem zweiten (5) Verbindungspunkt und zum Einspeisen einer reduzierten Spannung in einen Eingabepunkt (7), und
- einen Auslöse- und Detektorschaltkreis (8), der zwischen den Eingabepunkt (7) der reduzierten Spannung und den zweiten Verbindungspunkt (5) gekoppelt ist,
**gekennzeichnet dadurch, dass**
- die Spannungsteilerelemente (6) wenigstens zwei kapazitive Elemente (C1, C2) aufweisen, die beim Teilen der Spannung teilnehmen und von denen wenigstens eines (C2) zum Speichern von Energie und zum Entladen der Energie, die er speichert, über den Auslöse- und Detektorschaltkreis (8) eingerichtet ist, und
- jeder Auslöse- und Detektorschaltkreis (8) zum Produzieren eines Detektionspulses eingerichtet ist, wenn die reduzierte Spannung einen Auslösewert erreicht, wobei der Phasenausfalldetektor, zusätzlich zum Detektieren eines Fehlerzustands, auch detektierten kann, welche der Phasen defekt ist.

2. Phasenausfalldetektor gemäß Anspruch 1, **dadurch gekennzeichnet, dass** der Phasenausfalldetektor ein Widerstandselement zwischen den kapazitiven Elementen (C1, C2) und dem ersten Verbindungspunkt (4) aufweist.

3. Phasenausfalldetektor gemäß Anspruch 1 oder 2, **dadurch gekennzeichnet, dass** die Betriebsenergie des Auslöse- und Detektionsschaltkreises (8) von den Spannungsteilerelementen (6) genommen ist.

4. Phasenausfalldetektor gemäß einem der Ansprüche 1 bis 3, **dadurch gekennzeichnet, dass** der Auslöse- und Detektionsschaltkreis (8) ein Auslöseschaltkreiselement (V1, V2, V3) aufweist, das in einen leltfähigen Zustand auslöst, wenn die Steuerspannung auf einen Auslösepegel steigt.

5. Phasenausfalldetektor gemäß einem der Ansprüche 1 bis 4, **dadurch gekennzeichnet, dass** der Auslöse- und Detektorschaltkreis (8) einen Gleichrichter (V4) aufweist.

6. Phasenausfalldetektor gemäß einem der Ansprüche 1 bis 5, **dadurch gekennzeichnet, dass** der der Auslöse- und Detektorschaltkreis (8) einen OptoKoppler (V5) aufweist.

7. Phasenausfalldetektor gemäß einem der Ansprüche 1 bis 6, **dadurch gekennzeichnet, dass** er zur Verwendung in einem Dreiphasen-Netzwerk eingerichtet ist, in welchem Fall der Phasenausfalldetektor genau drei Detektorschaltkreise (3) aufweist.

8. Vorrichtung, die einen Multiphasen-Netzwerkeingang verwendet, **gekennzeichnet dadurch, dass** sie einen Phasenausfalldetektor (1) gemäß einem der Ansprüche 1 bis 7 aufweist.

9. Vorrichtung gemäß Anspruch 8, **gekennzeichnet dadurch, dass** sie ein Gleichrichter ist und dass der gemeinsame Verbindungspunkt (9) des Detektorschaltkreises des Phasenausfalldetektors (1) mit einem Bezugspotential gekoppelt ist, das von dem Gleichspannungsschaltkreis des Gleichrichters genommen ist.

## Revendications

1. Détecteur de défaillance de phase (1) pour un réseau d'alimentation électrique polyphasé, ledit détecteur de défaillance de phase comprenant un circuit de détection (3) pour chaque phase (2), ledit circuit de détection (3) comportant un premier point de connexion (4) pour se connecter à la phase (2) à surveiller et un second point de connexion (5), connecté à un point de connexion commun (9) des circuits de détection, dans lequel chaque circuit de détection (3) comprend :
- des éléments de division de tension (6) pour diviser la tension entre les premier (4) et second (5) points de connexion et pour injecter une tension réduite à un point d'entrée (7) ; et
- un circuit de déclenchement et de détection (8) connecté entre le point d'entrée de tension réduite (7) et le second point de connexion (5) ;
**caractérisé en ce que** :
- les éléments de division de tension (6) comprennent au moins deux éléments capacitifs (C1, C2), qui participent à la division de tension et dont au moins un desquels (C2) est prévu pour accumuler de l'énergie et pour décharger l'énergie accumulée à travers le circuit de déclenchement et de détection (8) ; et
- chaque circuit de déclenchement et de détection (8) est prévu pour générer une impulsion de détection lorsque la tension réduite atteint une valeur de déclenchement, de telle manière que le détecteur de défaillance de phase peut, outre la détection d'un état de défaillance, également détecter celle parmi les phases qui est concernée par la défaillance.

2. Détecteur de défaillance de phase selon la revendication 1, **caractérisé en ce que** le détecteur de défaillance de phase comprend un élément résistif branché entre les éléments capacitifs (C1, C2) et le premier point de connexion (4).

3. Détecteur de défaillance de phase selon la revendication 1 ou 2, **caractérisé en ce que** l'énergie de commande du circuit de déclenchement et de détection (8) est prise des éléments de division de tension (6).

4. Détecteur de défaillance de phase selon l'une quelconque des revendications 1-3, **caractérisé en ce que** le circuit de déclenchement et de détection (8) comprend un élément de circuit de déclenchement (V1, V2, V3), qui déclenche le passage à un état passant lorsque la tension de commande augmente jusqu'à atteindre un seuil de déclenchement déterminé.

5. Détecteur de défaillance de phase selon l'une quelconque des revendications 1-4, **caractérisé en ce que** le circuit de déclenchement et de détection (8) comprend un redresseur (V4).

6. Détecteur de défaillance de phase selon l'une quelconque des revendications 1-5, **caractérisé en ce que** le circuit de déclenchement et de détection (8) comprend une liaison optique (V5).

7. Détecteur de défaillance de phase selon l'une quelconque des revendications 1-6, **caractérisé en ce qu'**il est prévu pour être utilisé dans un réseau triphasé, auquel cas le détecteur de défaillance de phase comprend exactement trois circuits de détection (3).

8. Dispositif utilisant une entrée de réseau polyphasé, **caractérisé en ce qu'**il comprend un détecteur de défaillance de phase (1) selon l'une quelconque des revendications 1-7.

9. Dispositif selon la revendication 8, **caractérisé en ce qu'**il s'agit d'un redresseur et que le point de connexion commun (9) des circuits de détection du détecteur de défaillance de phase (1) est relié au potentiel de référence pris du circuit de tension continue du redresseur.
